# EUROPEAN PATENT SPECIFICATION

(11) **EP 1 783 950 B1**
(45) Date of publication and mention of the grant of the patent: **12.08.2009**
(21) Application number: 06705551.7
(22) Date of filing: 24.01.2006
(51) Int. Cl.: H04L 9/14, H04W 12/04

(54) **A METHOD FOR SETTING THE KEY AND SETTING THE INITIAL SECURITY KEY IN THE MOBILE TERMINAL**
VERFAHREN ZUR EINSTELLUNG DES SCHLÜSSELS UND ZUR EINSTELLUNG DES ANFÄNGLICHEN SICHERHEITSSCHLÜSSELS IN EINEM MOBILEN ENDGERÄT
PROCEDE POUR LE REGLAGE DE LA CLE ET REGLAGE DU CODE DE SECURITE INITIAL DANS LE TERMINAL MOBILE

(30) Priority: 30.01.2005 CN 200510033105
(43) Date of publication of application: 09.05.2007
(73) Proprietor: Huawei Technologies Co., Ltd., Longgang District, Shenzhen Guangdong 518129 (CN)
(72) Inventor: WANG, Zhengwei, Shenzhen, Guangdong 518129 (CN)
(74) Representative: Epping - Hermann - Fischer
(86) International application number: PCT/CN2006/000130
(87) International publication number: WO 2006/079282

(56) References cited:
- WO-A-98/12891
- WO-A-99/49692
- WO-A1-03/077467
- JP-A- 11 085 014
- US-A- 6 124 799
- US-B1- 6 259 908
- US-B1- 6 611 913

## Description

### Field of the Invention

The present invention relates to communication security technology, in particular, to a method for setting a key.

### Background of the Invention

In a network locking method in which an electronic key is hosted by network equipment, a mobile terminal is required to obtain a valid electronic key from a network side so as to operate normally after it is powered on. This is done by setting network locking function in the mobile terminal, i.e., by setting a security key in a security module of the mobile terminal, and correspondingly saving a security key in subscription data of the subscriber of the mobile terminal in the equipment on the network side.

When a mobile terminal obtains an electronic key from a network side, equipment associated with the network side obtains the saved security key corresponding to the mobile terminal from subscription data of the subscriber of the mobile terminal according to the subscriber card identity of the subscriber, and generates an electronic key according to the security key and then returns the generated electronic key to the mobile terminal. Here, subscriber card identity refers to the International Mobile Subscriber Identity (IMSI) of a subscriber card; however, it may also be a serial number of the subscriber card. In order to more clearly illustrate the invention, the term "subscriber card identity" hereafter refers to the International Mobile Subscriber Identity (IMSI) of a subscriber card. A security module of the mobile terminal determines whether the electronic key obtained from the equipment on the network side is valid or not according to the security key saved in the security module. If the electronic key is valid, then the mobile terminal is made to operate normally; otherwise, the mobile terminal is made to operate abnormally in a specified time period. Because the electronic key is generated according to the security key of the mobile terminal saved in the equipment associated with the network side and the security key is kept by the network operator, when a subscriber uses his/her mobile terminal in other networks, the mobile terminal cannot operate normally for the reason that no valid electronic key can be obtained by the security module. Therefore, network locking may be carried out for the mobile terminal. With respect to the network locking method in which an electronic key is hosted by network equipment, reference is made to Chinese Patent Application No. 200410036742.6, titled "A METHOD OF AN EQUIPMENT TO VERIFY ITS VALIDITY", wherein "operation information" obtained by a first equipment from a second equipment corresponds to "electronic key" according to the invention; or reference is made to International Patent Application No. PCT/CN2004/001325, titled "A METHOD OF AN EQUIPMENT TO VERIFY ITS VALIDITY", wherein "verification information" obtained by a first equipment from a second equipment corresponds to "electronic key" according to the invention.

In this method, an operation and maintenance password Pswd may be further set in the security module. The Pswd is used to control the setting of the network locking function on the mobile terminal and to make the mobile terminal operate normally by the subscriber inputting the Pswd correctly when the correct electronic key can not be obtained by the mobile terminal. Before the security module of the mobile terminal can not obtain the electronic key correctly and make the mobile terminal operate abnormally, the subscriber may be prompted to input the Pswd via an interface, and after the correct Pswd is input, the mobile terminal is made to operate normally; or when the subscriber inputs a wrong Pswd for certain times, the mobile terminal is made to operate abnormally.

For a mobile terminal leased out by an operator, the operator keeps this Pswd, but the subscriber of the leased mobile terminal cannot obtain this password, so the network locking function of the leased mobile terminal cannot be cancelled. As a result, a mobile terminal leased out by the operator cannot be used in the network of another operator. The operator may also make a mobile terminal leased out in a region to be used only in the region by limiting the access of the mobile terminal to the security key saved in the equipment on the network side, for example, a security key saved in a home region can only be accessed by a mobile terminal belonging to the home region. As a result, "cross-region use (that is, a mobile terminal obtained at a low price in a region is used in another region where the mobile terminal need to be obtained at a higher price)" caused by different marketing strategies of an operator for different regions may be avoided, so that the normal service of the operator may be ensured.

The above network locking method has a lot of advantages, and the network locking function cannot be bypassed or cancelled by modifying a program in the mobile terminal. Therefore, a strong anti-attack ability can be obtained. However, for an operator, it becomes a problem how to set the network locking function for each mobile terminal after it has been obtained from a mobile terminal provider, that is, how to ensure that a security key corresponding to the mobile terminal is saved in subscription data of the subscriber of the mobile terminal on the network side. If not properly solved, this problem may bring about a lot of trouble to the operation of the operator. For example, if the operator wants to get a security key of a mobile terminal after it is leased out and correspondingly save it to subscription data of the subscriber of the mobile terminal on the network side, it is difficult to do so and it will bring about a lot of trouble to the operation of the operator due to the security of the security key and the difficulty of manual operation. Therefore, the seek for a feasible method of setting network locking function of a mobile terminal, i.e., a method of setting a security key corresponding to the leased mobile terminal in subscription data of the subscriber of the mobile terminal on the network side, is key to the development of terminal-lease service of an operator.

US patent No. 6,259,908 B1 discloses a method of limiting access to data of a cellular telephone. The method of limiting access is accomplished by defining in the cellular telephone a subsidy lock code for use in activating the cellular telephone on the designated cellular network. The step of defining occurs before the cellular telephone is activated on a cellular network. The subsidy lock code is defined in manner that prevents the subsidy lock code from being erased using the keypad of the cellular telephone. When procedures are initiated by an entity for activating the cellular telephone on the cellular network, the entity must demonstrate knowledge of the subsidy lock code. Upon demonstration of knowledge of the subsidy lock code, the cellular telephone may be activated on the cellular network by the entity.

### Summary of the Invention

An embodiment of the present invention provides a method for setting a key, by means of which an operator need not manually set a security key corresponding to a mobile terminal in subscription data of the subscriber of the mobile terminal on a network side when the mobile terminal is leased out, so that various mistakes and leakages due to manual operation may be reduced. Another embodiment of the invention provides a method for setting an initial security key, i.e., a first security key, to a mobile terminal, by means of which a first security key may be securely written to a mobile terminal and a correlation between the identity of the mobile terminal and the first security key may be obtained.

According to an embodiment of the invention the following technical solution is provided:
A method of setting a key, including:
   setting a first security key in a mobile terminal;
   providing a corresponding relation between the first security key and an identity of the mobile terminal, the corresponding relation being saved on a network side; and
   obtaining the saved corresponding first security key according to the identity of the mobile terminal, and generating a second security key of the network side according to the first security key and saving the second security key of the network side in the subscription data of the subscriber of the mobile station;
   generating, at the network side, an electronic key according to the first security key, and returning the electronic key to the mobile terminal; and
   determining, in the mobile terminal, the validity of the electronic key after obtaining the electronic key, and generating and saving a second security key of the mobile terminal after it is determined that the electronic key is valid,
wherein the second security key of the network side is generated according to a random number, an authentication key in the subscription data and the saved corresponding first security key; and
a second security key of the mobile terminal is generated according the random number, an authentication key in a subscriber card and the saved first security key.

The obtaining the saved corresponding first security key according to the identity of the mobile terminal may further include: obtaining the identity of the mobile terminal, and getting the saved corresponding first security key according to the identity.

According to an embodiment, obtaining the identity of the mobile terminal further includes one of the following:
obtaining the identity of the mobile terminal from subscription data of a subscriber of the mobile terminal according to an identity of the subscriber, the identity of the mobile terminal being set in the subscription data of the subscriber; and, receiving the identity of the mobile terminal sent by the mobile terminal.

According to an embodiment, generating the electronic key according to the first security key further includes one of the following:
receiving a request for obtaining an electronic key from the mobile terminal and a random number carried in the request, and obtaining a result according to the.random number and the first security key, and taking the result as the electronic key to be returned to the mobile terminal;
generating a controllable random number, obtaining a result according to the controllable random number and the first security key, and taking the result and the controllable random number together as the electronic key to be returned to the mobile terminal; and
generating a random number, obtaining a result according to a pre-saved serial number, the random number and the first security key, and taking the serial number, the random number and the result together as the electronic key to be returned to the mobile terminal.

According to an embodiment, the method further includes:
arranging a mobile terminal equipment information module for saving the correlation between the identity of the mobile terminal and the first security key on the network side.

The network side may request the first security key corresponding to the mobile terminal from the mobile terminal equipment information module according to the identity of the mobile terminal.

According to an embodiment, the method further includes:
saving a corresponding zone information according to the identity of the mobile terminal; and determining whether the corresponding first security key has been obtained successfully according to the consistency between the identity of the subscriber card of the mobile terminal or the directory number of the mobile subscriber and the zone information corresponding to the identity of the mobile terminal.

According to an embodiment, the method further includes:
saving the corresponding identity information of the subscriber card or the directory number of the mobile subscriber according to the identity of the mobile terminal;
and determining whether the corresponding first security key has been obtained successfully according to the consistency between the identity of the subscriber card of the mobile terminal or the directory number of the mobile subscriber and the identity of the subscriber card of the mobile terminal or the directory number information of the mobile subscriber corresponding to the identity of the mobile terminal. According to an embodiment, the identity of the mobile terminal is the identity of the subscriber card of the mobile terminal.

A further embodiment of the invention provides a communication system comprising:
a network side being adapted for providing a wireless communication service;
a mobile terminal being adapted for communicating with the network side and for setting a first security key,
   the network side being adapted to save a corresponding relation between the first security key and an identity of the mobile terminal or an identity of a subscriber card of the mobile terminal, to obtain the saved corresponding first security key according to the identity, and to generate a second security key of the network side according to the first security key and to save the second security key of the network side in the subscription data of the subscriber of the mobile terminal,
   the network side is further adapted to generate an electronic key according to the first security key, and return the electronic key to the mobile terminal; and
   the mobile terminal is further adapted to determine the validity of the electronic key after obtaining the electronic key, and generate and save a second security key of the mobile terminal after it is determined that the electronic key is valid
wherein the second security key of the network side is generated according to a random number, an authentication key in the subscription data and the saved corresponding first security key; and
a second security key of the mobile terminal is generated according the random number, an authentication key in a subscriber card and the saved first security key.

Therefore, the embodiments of the invention may effectively reduce the complexity of the development of terminal-lease service of an operator, and no service cost will be added when network locking of a leased terminal is realized by an operator. Furthermore, it will be more simple and reliable to perform network locking of a leased terminal. As a result, the invention has a broad application prospect.

### Brief Description of the Drawings

Figure 1 is a simplified flow chart of a method of setting a security key according to the first embodiment of the invention;
Figure 2 is a simplified flow chart of a method of setting a security key according to the second embodiment of the invention;
Figure 3 is a simplified flow chart of a method of setting a security key according to the third embodiment of the invention;
Figure 4 is a simplified flow chart of a method of setting a security key according to the fourth embodiment of the invention; and

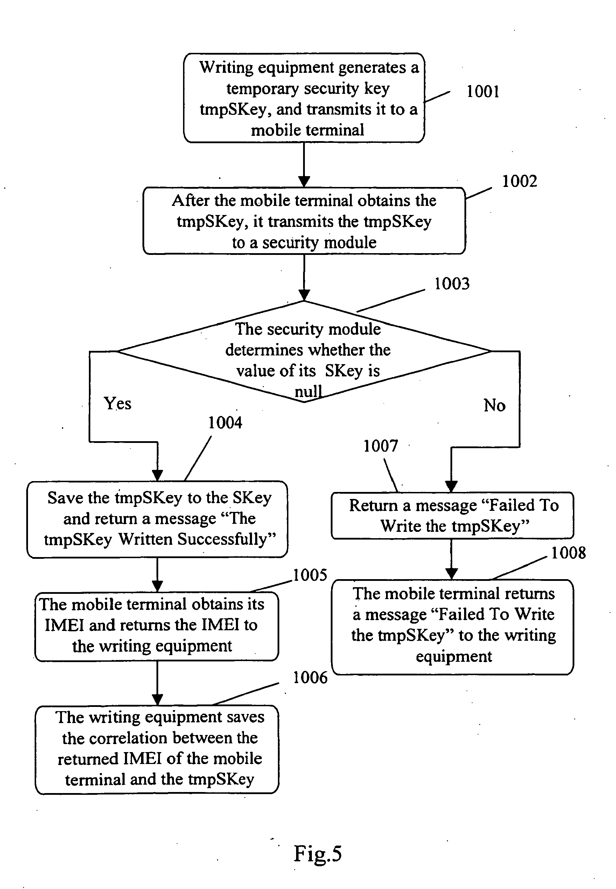

Figure 5 is a simplified flow chart of a method of setting an initial security key to a mobile terminal according to an embodiment of the invention.

### Detailed Description of the Embodiments

The invention will now be described in detail in conjunction with the drawings and particular embodiments.

In a method of setting a key according to an embodiment of the invention, in order to avoid manually setting a security key corresponding to a mobile terminal in subscription data of the subscriber of the mobile terminal by an operator when the mobile terminal is leased out, a first security key may be preset in the mobile terminal before the mobile terminal is leased out, for example, a first security key may be preset in the mobile terminal before the mobile terminal is shipped from a manufacturing factory. When the operator obtains the mobile terminal from a mobile terminal manufacturer, it may obtain a correlation table of the first security key of the mobile terminal and the identity of the mobile terminal. Alternatively, when an operator obtains a mobile terminal, a first security key is preset and the correlation table is obtained. The operator saves the correlation table in equipment associated with the network side. Therefore, the network side may obtain a first security key corresponding to a mobile terminal connected to the network from the correlation according to the identity of the mobile terminal, and obtain a second security key according to the first security key. Correspondingly, the mobile terminal obtains a second security key consistent with that of the network side according to a first security key saved therein. Therefore, a security key corresponding to the mobile terminal is set in subscription data of the subscriber of the mobile terminal. For a CDMA system, the identity of the mobile terminal may be an electronic serial number (ESN) of a mobile terminal; for a WCDMA system, the identity may be an International Mobile Equipment Identity (IMEI). However, this identity may also be a random identifier set by a subscriber or an operator. For the purpose of convenience, the identity of a mobile terminal herein is referred to as IMEI.

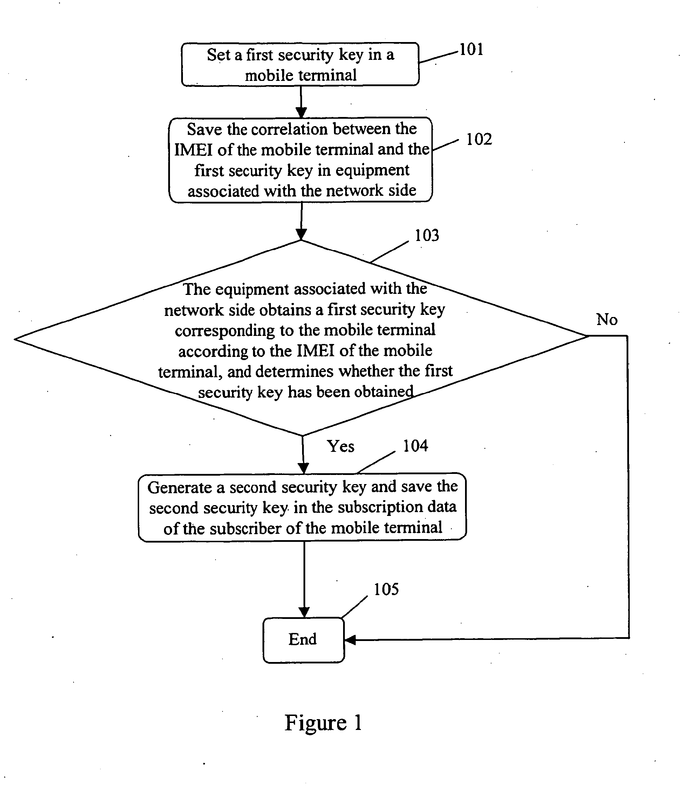

In the flow chart according to an embodiment of the invention shown in Figure 1, in step 101, a first security key is preset in a security module of a mobile terminal. For example, a SKey storage unit is arranged in the mobile terminal, and the first security key is saved in the SKey. While the key is set, the correlation between the identity of the mobile terminal IMEI and the first security key is obtained. For example, a storage unit for storing a security key is arranged in the security module of the mobile terminal. Before the mobile terminal is shipped from a manufacturing factory, a randomly generated first security key is preset in the storage unit by a mobile terminal manufacturer. Of course, the setting of the first security key may also be performed by an operator. While the mobile terminal manufacturer sets a first security key to each mobile terminal, a correlation table of the IMEI of the mobile terminal and the first security key is obtained.

In step 102, equipment associated with a network side saves the correlation between the IMEI of the mobile terminal and the first security key. If the first security key of the mobile terminal is set by a mobile terminal manufacturer, then the mobile terminal manufacturer may obtain the correlation, and the operator may obtain the correlation table from the mobile terminal manufacturer. When the mobile terminal manufacturer provides a mobile terminal to an operator, it may also provide a correlation table of the IMEI of a mobile terminal and a first security key. The operator writes the table to associated equipment. The associated equipment may be a Home Location Register (HLR) or an authentication center (AUC), or a means which may be accessed by an HLR, for example, a terminal equipment information module MSI.

In step 103, when a security key is set in subscription data of the subscriber of the mobile terminal, the equipment associated with the network side obtains a first security key corresponding to the mobile terminal according to the IMEI of the mobile terminal, and determines whether the first security key has been obtained. If the first security key has been obtained, then the equipment associated with the network side generates a second security key in step 104, and saves the second security key in subscription data of the subscriber of the mobile terminal; otherwise, the process ends in step 105.

In step 103, the step of obtaining the saved first security key corresponding to the mobile terminal by the network side may be performed as follows: the network side obtains a first security key from the correlation table of the IMEI of the mobile terminal and the first security key saved in step 102 according to the IMEI of the mobile terminal. The network side may obtain the IMEI of a mobile terminal in two ways: the IMEI of the mobile terminal is contained in a request message for an electronic key sent by the mobile terminal, and the network side may obtain a corresponding IMEI from the request message; or, the IMEI is saved in subscription data of a subscriber, and the network side retrieves a corresponding IMEI according to the IMSI.

In step 103, the security key may be set in the subscription data of the subscriber of the mobile terminal when the mobile subscriber completes the subscription procedure and the subscription data is written into associated equipment, for example, the subscription data of the subscriber is entered into HLR equipment of the subscriber; or when a batch process operation for setting a security key in subscription data is performed by associated equipment, for example, a batch process operation is performed after a batch of subscription data of subscribers are entered, as a result of which, respective security keys may be set in the batch of subscription data of subscribers; or when the mobile terminal logs on a network for the first time, for example, when the mobile terminal requests for an electronic key and it is determined that this is the first time for a mobile terminal to log on the network; or when a request associated with the mobile terminal is received, for example, the mobile terminal determines that it is used for the first time and then initiates a command for automatically synchronizing its security key.

In step 104, the equipment associated with the network side generates a second security key, which may be directly the first security key or may be computed according to one or more of a random number, an authentication key KI in subscription data, and the obtained first security key, etc. Correspondingly, the mobile terminal must generate and save a corresponding second security key, that is, the mobile terminal must compute and save a second security key according to one or more of a random number, a KI in the subscriber card and the saved first security key, etc. Here, during the computation process of the second security key performed by the network side, when a KI is used, a password key CK or an integrity key IK generated during the authentication may be used in place of the KI to compute the second security key. Similarly, during the computation process of the second security key performed by the terminal side, when a KI is used, a CK or an IK generated during the authentication may be used in place of the KI to compute the second security key. The above computation may be digest computation. Of course, it may also be encryption-decryption computation, or any other computation. With respect to encryption-decryption computation or digest computation, reference is made to a book titled *CRYPTOGRAPHY*. In view of the security of a security key of a terminal, the process of writing a second security key by a mobile terminal is required to be performed in a controlled way(not freely). For example, when a second security key is written, an operation and maintenance password must be entered, or its validity must be verified by a security module. The following embodiment shows a process in which a mobile terminal writes a second security key through validity verification.

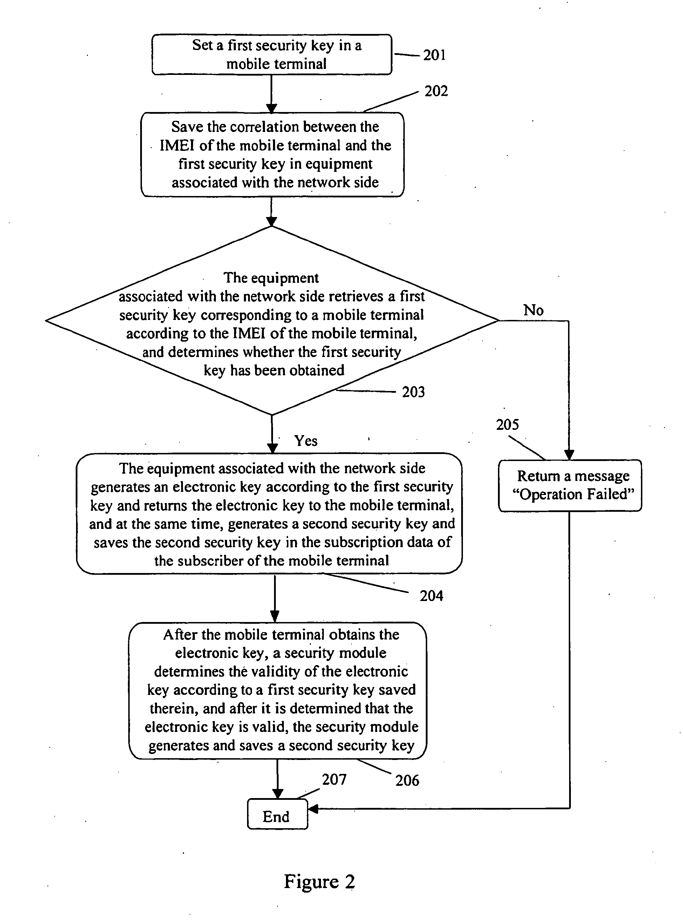

In the process according to an embodiment of the present invention shown in Figure 2, in step 201, a first security key is preset in a security module of a mobile terminal.

In step 202, the correlation between the IMEI of a mobile terminal and a first security key is saved in equipment associated with the network side.

In step 203, when a security key is set in subscription data of the subscriber of the mobile terminal, the equipment associated with the network side obtains a first security key corresponding to the mobile terminal according to the IMEI of a mobile terminal, and determines whether the first security key has been obtained. if the first security key has been obtained, then the equipment associated with the network side generates an electronic key according to the first security key in step 204, and returns the electronic key to the mobile terminal, at the same time, generates a second security key and save the second security key in the subscription data of the subscriber of the mobile terminal; otherwise, the process proceeds to step 205 in which a message "Operation Failed" is returned to the mobile terminal, and then the process ends in step 207.

In step 206, after the mobile terminal obtains the electronic key, the security module determines the validity of the electronic key according to a first security key saved therein, and after it is determined that the electronic key is valid, the security module generates and saves a second security key.

After step 206, the mobile terminal returns the determination result of the validity of the electronic key to the equipment associated with the network side. The equipment associated with the network side determines whether to save the second security key according to the determination result. If it is determined that the electronic key is valid, then the network side saves the second security key; otherwise, the network side does not save the second security key. For example, in step 204, the mobile terminal will not generate and save the second security key at first, instead, it determines whether to generate and save the second security key according to the determination result of the validity of the electronic key which is returned by the mobile terminal. Alternatively, it may set the second security key generated and saved at first as invalid, and then set the second security key as valid after it receives a message returned by the terminal indicating that the electronic key is valid.

In the above method, if the mobile terminal determines in step 206 that the electronic key obtained from the network side is valid, then the first security key saved by the mobile terminal and the first security key saved by the network side according to IMEI are consistent with each other, and apparently, according to consistent computing methods, the second security keys obtained by the terminal and the network side respectively are consistent with each other too. If the electronic key obtained from the network side is invalid, then the first security key of the mobile terminal will not be modified, and the security key in the subscription data of the subscriber of the mobile terminal on the network side will not be set. As a result, it cannot be ensured that the security key saved in the subscription data of the subscriber of the mobile terminal on the network side and the first security key saved in the mobile terminal are consistent with each other.

After the second security key is set in the subscription data of the subscriber of the mobile terminal on the network side and in the mobile terminal by means of the above method, when the mobile terminal logs on the network for the next time and obtains an electronic key from the network side, the network side will obtain a security key i.e., the second security key saved in step 204, from the subscription data of the subscriber according to the IMSI of the subscriber of the mobile terminal, and generate an electronic key using the security key and return the electronic key to the mobile terminal. When the mobile terminal obtains the electronic key, it determines the validity of the electronic key according to a second security key saved therein. If the electronic key is valid, then the mobile terminal is made to operate normally; otherwise, the mobile terminal is made to operate abnormally. Thus, network locking of a mobile terminal can be realized.

In step 203, the security key may be set in the subscription data of the subscriber of the mobile terminal, when a request associated with the mobile terminal is received, for example, when the mobile terminal determines that it is used for the first time and initiates a command for automatically synchronizing its security key; or when it is found that a subscriber logs on the network for the first time or a mobile terminal is used for the first time, so that the network locking function should be set, i.e., a security key should be set correspondingly in the mobile terminal and subscription data of a subscriber on the network side. Of course, it may also be the time when a command message received from the mobile terminal contains an indication flag of the mobile terminal indicating a security key should be set. Of course, it may also be the time when the network side initiates an update of a security key of the mobile terminal and carries information indicating that the security key should be updated in a message sent to the mobile terminal.

In step 206, the mobile terminal may generate and save a second security key only when it is determined that the mobile terminal needs to set a security key. For example, when it is found that the mobile terminal is used for the first time, the network locking function should be set, that is, a security key should be set. Of course, it may also be the time when the command message received from the network contains an indication flag of the network indicating a security key should be set. A first-use flag may be set for detecting the first use of a mobile terminal. When it is used for the first time, this flag is set as 1. After that, it is set as 0. Therefore, it can be determined whether a mobile terminal is used for the first time according to whether the flag is 1.

In step 204, the ways of obtaining an electronic key according to a first security key include, but are not limited to the following three ways:

Firstly, when the mobile terminal sends a request for obtaining an electronic key to the network side, a random number msRand generated by the mobile terminal is carried in the request, and the network side obtains a computing result according to the msRand and the first security key, and takes the computing result as an electronic key to be returned to the mobile terminal. Correspondingly, in step 206, a security module of the mobile terminal determines the validity of the electronic key according to a first security key saved therein as follows: it obtains a computing result according to its first security key and the msRand and determines whether the computing result is consistent with the electronic key returned by the network, for example, it determines whether they are the same as each other. If yes, then the electronic key is regarded as valid; otherwise, it is regarded as invalid.

Secondly, the network side generates a controllable random number, obtains a computing result according to the controllable random number and the first security key, and takes the computing result and the controllable random number together as an electronic key to be returned to the mobile terminal. Correspondingly, in step 206, a security module of the mobile terminal determines the validity of the electronic key according to a first security key saved therein as follows: it obtains a computing result according to its first security key and the obtained controllable random number RAND, and determines whether the computing result is consistent with that in the electronic key returned by the network, for example, it determines whether they are the same as each other. If not, then it regards the electronic key as invalid; otherwise, it further determines whether the controllable random number RAND is valid, that is, it determines whether the random number is a real controllable random number, or whether the random number is controlled. If yes, then it regards the electronic key as valid; otherwise, the network may be requested to synchronistically regenerate a reference number of a controllable random number and to regenerate a controllable random number, and to regenerate an electronic key via the controllable random number and the first security key. With respect to a nullable random number, a reference number and a method of determining whether a random number is controllable, reference is made to Chinese Patent Application No. 200410078038.7, titled "A METHOD OF AUTHENTICATION", and they will not be described in detail here.

Thirdly, the network side generates a random number RAND, obtains a computing result according to a pre-saved serial number SQN, the RAND and a first security key, and takes the SQN, the RAND and the computing result together as an electronic key to be returned to the mobile terminal. Correspondingly, in step 206, a security module of the mobile terminal determines the validity of the electronic key according to a first security key saved therein as follows: it obtains a computing result according to the obtained SQN, RAND and its first security key and determines whether the computing result is consistent with that in the electronic key returned by the network, for example, it determines whether they are the same as each other. if not, then it regards the electronic key as invalid; otherwise, it further determines whether the SQN is acceptable. If yes, then it regards the electronic key as valid; if not, then the network may be requested to resynchronize the SQN and regenerate an electronic key. With respect to the setting of an SQN, the method of determining whether an SQN is acceptable and the method of synchronizing an SQN, reference may be made to the related protocol specification of 3GPP 33.102/29.002, and they will not be described in detail here.

As discussed above, in step 204, an electronic key may also be generated according to the first security key as follows: the electronic key is obtained according to the computation and/or combination of one or more of a random number, a KI in subscription data and the obtained corresponding first security key, etc. In a preferred embodiment, the electronic key is computed according to a Rand, a first security key and a KI. Here, the random number may be generated by the network side, for example, it may be a controllable random number generated by the network, or it may be a random number and a serial number generated by the network; or it may be generated by a mobile terminal and sent to the network. If the random number is generated by the network side and a random number and/or a serial number is used when computing the electronic key, then the electronic key should contain the random number and the serial number. Similarly, different processes for generating random numbers and electronic keys may be employed for different authentication modes, and they will not be described again here. Correspondingly, in step 206, a security module of the terminal determines the validity of the electronic key according to a first security key saved therein as follows: it also obtains a computing result according to one or more of a random number, a KI in subscription data and the saved corresponding first security key, etc., and determines the validity of the electronic key by comparing the computing result with that in the obtained electronic key. If they are consistent with each other, for example, if they are the same as each other, then the electronic key is valid; otherwise, it is invalid.

In step 202, the network side may save the correlation between the identity of the mobile terminal IMEI and the first security key in an HLR or in a terminal equipment information module MSI. If the correlation is saved in a terminal equipment information module MSI, in step 203, when a security key is set in subscription data of the subscriber of the mobile terminal, network equipment, such as an HLR, may obtain the corresponding first security key from the MSI according to the IMEI of the mobile terminal. When an MSI cannot obtain the corresponding first security key, a message indicating the failure of the obtaining of the first security key is sent to the HLR. Therefore, the HLR may know whether the first security key can be obtained. Of course, the MSI may directly generate an electronic key according to the first security key. As a result, the HLR may obtain an electronic key directly from the MSI and return the electronic key to the terminal. Similarly, a second security key can also be generated by the MSI. When a KI or a CK or an IK or a random number RAND is needed for computing the second security key, the HLR needs to transmit the information to the MSI.

In step 204, the network equipment may save the second security key by setting a SKey field in subscription data of the subscriber of the mobile terminal and saving the value of the second security key to the SKey in the subscription data of the subscriber. Alternatively, the second security key may be saved in another table or equipment, for example, in the MSI, according to the IMSI.

In step 204, the network side HLR may generate a second security key by computing according to one or more of a random number, an authentication key KI in subscription data and a corresponding first security key, etc. Correspondingly, in step 206, the terminal may also generate a second security key by computing according to one or more of a random number, a KI in the subscriber card and a SKey value, etc. Of course, during the process of computing the second security key by the network side, when a KI is used, the CK or IK generated during authentication may be used in place of the KI to generate the second security key. Correspondingly, in step 206, during the process of computing the second security key by the terminal side, when a KI is used, the CK or IK generated during authentication may be used in place of the KI to generate the second security key.

By means of the above method, after a corresponding second security key is set in a mobile terminal and in the SKey in subscription data of the subscriber of the mobile terminal, that is, after the network locking function is set, if the subscriber card of the mobile terminal is replaced, the equipment associated with the network side cannot obtain a security key value corresponding to the SKey value set in the mobile terminal from subscription data corresponding to the new subscriber card. Thus, after the mobile terminal accesses a network, it cannot obtain a valid electronic key from the network, so that the mobile terminal cannot operate normally. As a result, "cross-network use" and "cross-region use" of a mobile terminal may be prevented.

A subscriber may obtain the authentication key KI of his/her subscriber card by a physical measure. However, he/she may not know the old security key, i.e., the first security key preset in the mobile terminal. Thus, by means of a second security key generated according to the first security key, a person who gets a lost mobile terminal may be prevented to change the program of the mobile terminal immediately and intercept the Rand so as to obtain a second security key computed from only the KI and the Rand. In a preferred embodiment, if the second security key is computed according to the first security key, the KI and the Rand together, then a subscriber may not know the second security key unless he/she gets the first security key. Because the subscriber does not know the second security key, he/she cannot synchronize the SKey value in his/her subscription data from an operator. For example, after the subscriber gets the second security key, he/she may request an operator to change the SKey in his/her subscription data in an HLR to the value of a second security key, so that he/she may illegally use the mobile terminal. The reason why a Rand and a KI are used in the computation lies in that: for a valid subscriber, even if the first security key of his/her mobile terminal is leaked by the manufacturer of the mobile terminal, because the newly generated security key, i.e., the second security key is computed according to the Rand and KI, a person who illegally gets the mobile terminal cannot know the corresponding KI or Rand, and thus cannot know the newly generated second security key. The Rand may ensure the variability of the generated second security key, that is, the terminal and the network side may use a new RAND to generate a second security key at any moment, and update the SKey value corresponding to the terminal and the network with the second security key. Correspondingly, the KI may ensure the security of the generated second security key.

In the above embodiment, the equipment associated with the network side in step 203 may be an HLR.

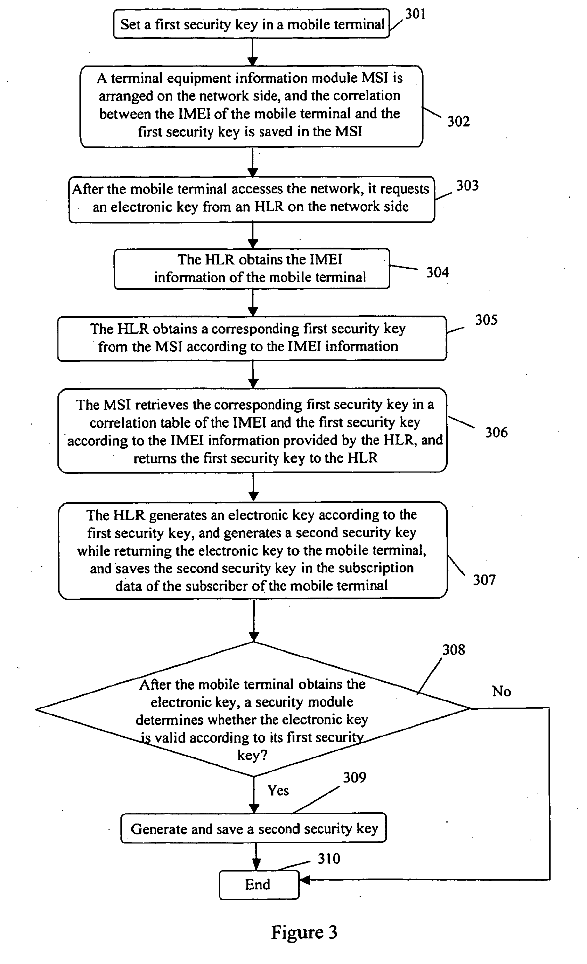

In the process according to an embodiment of the present invention shown in Figure 3, the correlation between the IMEI of the mobile terminal and the first security key is saved in a terminal equipment information module MSI.

In step 301, a first security key is set in a mobile terminal. In this embodiment, it is described by taking the example that a SKey storage unit is arranged in the mobile terminal and the first security key is saved in the SKey.

In step 302, a terminal equipment information module MSI is arranged on a network side, and the correlation between the IMEI of the mobile terminal and the first security key is saved in the MSI.

In step 303, after the mobile terminal accesses the network, it requests an electronic key from the HLR on the network side.

In step 304, the HLR obtains the IMEI information of the mobile terminal. For example, the corresponding IMEI information of a mobile terminal may be saved in subscription data of a subscriber, thus, the HLR may obtain the IMEI information from the corresponding subscription data; the IMEI information may also be carried in a request command of a mobile terminal, and the HLR resolves the corresponding IMEI information from the request command; or the correlation between IMSI and IMEI may be saved in another module in which information can be obtained by the HLR, and the HLR obtains the corresponding IMEI information by sending request information to the module according to the IMSI.

In step 305, the HLR requests the corresponding first security key from the MSI according to the IMEI information.

In step 306, the MSI retrieves the corresponding first security key in a correlation table of the IMEI and the first security key according to the IMEI information provided by the HLR, and returns the first security key to the HLR.

In step 307, the HLR generates an electronic key according to the first security key, and generates a second security key while returning the electronic key to the mobile terminal, and saves the second security key in subscription data of the subscriber of the mobile terminal.

In step 308, after the mobile terminal obtains the electronic key, a security module determines the validity of the electronic key according to its first security key. If the electronic key is valid, then in step 309, the security module generates a second security key, and saves the second security key, for example, the second security key may be saved in the SKey for determining the validity of an electronic key delivered by the network for the next time; if the electronic key is not valid, then the process proceeds to step 310 directly and ends.

In step 309, after the mobile terminal successfully sets the value of the security key, that is, after the mobile terminal saves the second security key, it may returns a command indicating the success of the setting to the HLR, then the HLR may determine whether to generate and save a second security key according to the returned command. At this point, the HLR may not generate and save a second security key at first, or it may set the second security key generated and saved at first as invalid, and then set the second security key as valid after a command indicating the success of the setting returned by the terminal is received.

The HLR may send a message to the MSI indicating that the security key has been set successfully by the terminal, in which the IMSI of the terminal subscriber may be carried. The MSI records the IMSI of the subscriber of the mobile terminal for determining the subscriber of the mobile terminal.

In step 302, the corresponding zone information may be further saved according to the IMEI. The zone information may be the zone value of the IMSI number of the subscriber card, or it may be the zone value of the directory number of the mobile subscriber. For example, the zone value may correspond to a city area code or HLR code respectively. Thus, in step 305, when the HLR requests the corresponding first security key according to the IMEI information, it may further send the corresponding IMSI information or the directory number information of the mobile subscriber to the MSI. Correspondingly, in step 306, before the MSI returns the first security key to the HLR, the MSI may obtain the corresponding zone value according to the IMEI, and determine whether the obtained zone value is consistent with the IMSI or the directory number information of the mobile subscriber transmitted by the HLR. If they are consistent with each other, then the MSI sends the first security key to the HLR; otherwise, it returns a message "Failed To Request The First Security Key" to the HLR or a message "Unauthorized To Obtain The First Security Key" to the HLR. Of course, if the corresponding zone information is further saved according to the IMEI in step 302, then in step 305, when the HLR requests the corresponding first security key from the MSI according to the IMEI information, the corresponding IMSI information or the directory number information of the mobile subscriber may not be sent to the MSI. In such a case, in step 306, when the MSI returns the first security key to the HLR, the MSI may further obtain the corresponding zone value according to the IMEI and return the obtained zone value and the first security key together to the HLR, and the HLR determines whether the zone value returned by the MSI is consistent with the IMSI of the subscriber of the mobile terminal or the directory number information of the mobile subscriber. If they are consistent with each other, then the HLR determines that the first security key has been obtained successfully; otherwise, the HLR determines that it has failed to obtain the first security key.

In step 302, the corresponding IMSI information or the directory number information of the mobile subscriber may be further saved according to the IMEI. Thus, in step 305, when the HLR requests the corresponding first security key from the MSI according to the IMEI information, the corresponding IMSI information or the directory number information of the mobile subscriber may be further sent to the MSI. Correspondingly, in step 306, before the MSI returns the first security key to the HLR, the MSI may obtain the corresponding IMSI information or the directory number information of the mobile subscriber according to the IMEI, and determine whether the obtained IMSI information or directory number information of the mobile subscriber contains the IMSI information or the directory number information of the mobile subscriber transmitted by the HLR. If yes, then the MSI sends the first security key to the HLR; otherwise, it returns a message "Failed To Request The First Security Key" to the HLR, or a message "Unauthorized to obtain the first security key" to the HLR. Of course, if the corresponding zone information is further saved according to the IMEI in step 302, then in step 305, when the HLR requests the corresponding first security key from the MSI according to the IMEI information, the corresponding IMSI information or the directory number information of the mobile subscriber may not be sent to the MSI. In such a case, in step 306, when the MSI returns the first security key to the HLR, the MSI may obtain the corresponding IMSI information or directory number information of the mobile subscriber according to the IMEI and return the obtained IMSI information or directory number information of the mobile subscriber and the first security key together to the HLR, and the HLR determines whether the IMSI information or the directory number information of the mobile subscriber returned by the MSI is consistent with the IMSI of the subscriber of the mobile terminal or the directory number information of the mobile subscriber. If they are consistent with each other, then the HLR determines that the first security key has been obtained successfully; otherwise, the HLR determines that it has failed to obtain the first security key.

In step 307, the HLR saves the second security key. That is, a SKey is further set in subscription data of the subscriber, and the HLR saves the second security key by setting the value of SKey with the second security key. That is, the value of SKey is set to the second security key.

Step 307 may further include: transmitting the generated second security key to the MSI, and saving the second security key in the MSI, so that the MSI may transmitting the second security key to the HLR as the first security key when the HLR requests the corresponding first security key according to the IMEI for the next time.

In step 307, the network side may generate a second security key by directly taking the first security key as the second security key. Correspondingly, in step 308, the terminal will not generate a second security key or it will not perform the operation in step 308.

In step 307, the HLR on the network side may generate a second security key by computing according to one or more of a random number, a KI in subscription data and the corresponding first security key, etc. Correspondingly, in step 309, the terminal may generate a second security key by computing according to one or more of a random number, a KI in the subscriber card and the set SKey value, etc. Of course, during the computation of the second security key by the network side, when a KI is used, a CK or an IK generated during authentication may also be used in place of the KI to compute the second security key. Correspondingly, in step 309, during the computation of the second security key by the terminal side, when a KI is used, a CK or an IK generated during authentication may also be used in place of the KI to compute the second security key.

In another method of setting a key according to an embodiment of the invention, a first security key is preset in a security module of a mobile terminal. For example, a SKey storage unit is arranged in the mobile terminal, and the first security key is saved in the SKey. The correlation between the IMSI of the subscriber card of the mobile terminal and the first security key is saved in equipment associated with the network side. When a security key is set in subscription data of the subscriber of the mobile terminal, the equipment associated with the network side obtains a first security key corresponding to the mobile terminal according to the IMSI of the subscriber card of the mobile terminal, and determines whether the first security key has been obtained. If the first security key has been obtained, then the equipment associated with the network side generates a second security key and saves the second security key in the subscription data of the subscriber of the mobile terminal; otherwise, the process ends.

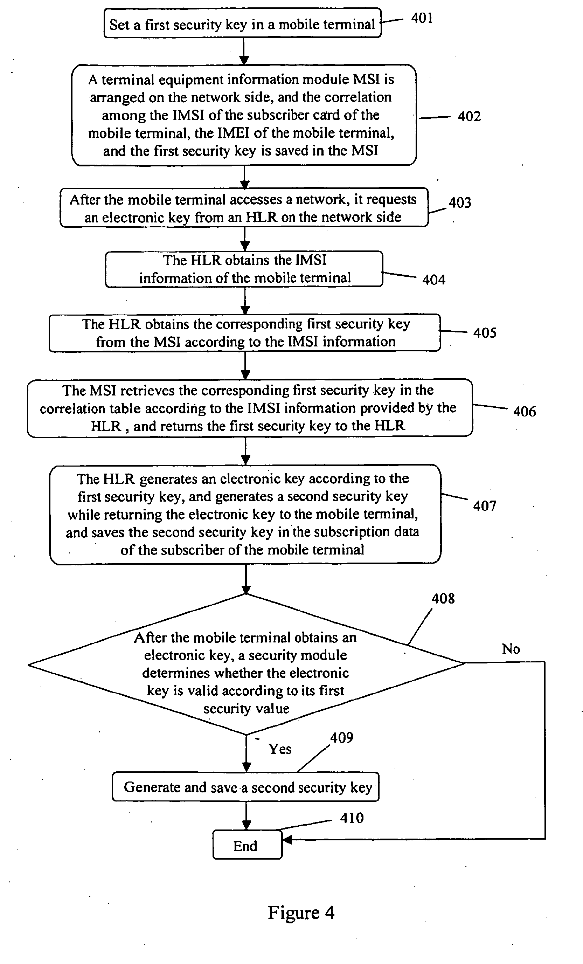

In the process according to an embodiment of the present invention shown in Figure 4, the correlation between the IMSI of the subscriber card of the mobile terminal and the first security key is saved in a terminal equipment information module MSI. The HLR requests the corresponding first security key from the MSI according to the IMSI of the subscriber card of the mobile terminal.

In step 401, a first security key is set in a mobile terminal. For example, a SKey storage unit is arranged in the mobile terminal, and the first security key is saved in the SKey.

In step 402, a terminal equipment information module MSI is arranged on the network side, and the correlation between the IMSI of the subscriber card of the mobile terminal and the first security key is saved in the MSI.

In step 403, after the mobile terminal accesses the network, it requests an electronic key from the HLR on the network side.

In step 404, the HLR obtains the IMSI information of the subscriber card of the mobile terminal.

In step 405, the HLR requests the corresponding first security key from the MSI according to the IMSI information.

In step 406, the MSI retrieves the corresponding first security key in the correlation table according to the IMSI information provided by the HLR, and returns the first security key to the HLR.

In step 407, the HLR generates an electronic key according to the first security key, and generates a second security key while returning the electronic key to the mobile terminal, and saves the second security key in subscription data of the subscriber of the mobile terminal.

In step 408, after the mobile terminal obtains an electronic key, a security module determines the validity of the electronic key according to its SKey value. If the electronic key is valid, then in step 409, the mobile terminal generates a second security key and saves the second security key, for example, in the SKey for determining the validity of the electronic key delivered by the network for the next time; otherwise, the process ends in step 410.

In step 406, if the MSI does not obtain the corresponding first security key, then the MSI returns a message "Failed To Obtain The First Security Key" to the HLR. At this point, step 407 and the subsequent steps will not be executed.

In step 402, the correlation between the IMSI of the subscriber card of the mobile terminal and the identity of the mobile terminal IMEI may be further saved. Correspondingly, in step 404, the HLR further obtains the IMEI information of the mobile terminal. In step 405, when the HLR requests the first security key, the IMEI information of the mobile terminal will be sent to the MSI. In step 406, the MSI obtains the corresponding first security key according to the IMSI and IMEI information provided by the HLR, and returns the obtained first security key to the HLR.

Of course, when the correlation between the IMSI of the subscriber card of the mobile terminal and the identity of the mobile terminal IMEI is saved in step 402, the HLR may also further obtain the IMEI information of the mobile terminal in step 404. Correspondingly, in step 406, when the MSI obtains the first security key according to the IMSI, it may obtain the IMEI information of the mobile terminal at the same time and return the obtained IMEI information of the mobile terminal and the first security key together to the HLR. Before step 407, the HLR further determines whether the IMEI information returned by the MSI is consistent with the IMEI information obtained in step 404. If they are consistent with each other, then the HLR performs step 407 and the subsequent operations; otherwise, the HLR does not perform step 407 and the subsequent operations.

According to the above method, when an operator leases out a mobile terminal and opens an account, the IMEI of the mobile terminal and the corresponding IMSI of the subscriber card will be saved in the MSI. Thus, the MSI or HLR may determine whether the subscriber card corresponding to the IMSI may use the mobile terminal corresponding to the IMEI so as to determine whether a valid electronic key should be returned to the mobile terminal, so that the mobile terminal may automatically update its security key according to the electronic key, for example, the mobile terminal may automatically update the first security key. Therefore, network locking function may be performed on the leased terminal.

In the above fourth embodiment, the directory number of the mobile subscriber may be used to replace the IMSI of the subscriber card of the mobile terminal. This will not be described in detail here.

In an embodiment of the invention, the mobile terminal may generate a second security key via a security module, or a program of the mobile terminal and/or the subscriber card, or a combination thereof. For example, the second security key may be generated as follows: a first computing result is obtained in the subscriber card according to a random number and a KI in the subscriber card, and it is returned to a program of the mobile terminal; the program obtains a second computing result according to the first computing result, and returns the second computing result to a security module; and the security module obtains a second security key according to the SKey saved therein and the second computing result. The computation may be digest computation or encryption-decryption computation. The security module may be a physical module, or a logical module, or even a function.

When a mobile terminal according to the embodiment determines that an electronic key is invalid, the mobile terminal will not set the security key, and will continue to attempt to obtain an electronic key until a valid electronic key is obtained, or when the number of unsuccessful attempts reaches a certain value, such as 10, the mobile terminal will stop attempting. Of course, an operation and maintenance password Pswd may be further set in the security module. This operation and maintenance password may be used to cancel network locking function and to set a security key. When the mobile terminal cannot obtain a correct electronic key, the subscriber may correctly input the password so as to make the mobile terminal operate normally. When a security module in the mobile terminal cannot correctly obtain an electronic key, the subscriber may be prompted to input the operation and maintenance password via an interface. After the subscriber inputs a correct operation and maintenance password, network locking function will be cancelled or a security key will be set. Or, after a subscriber wrongly inputs the operation and maintenance password for certain times, such as 10, the subscriber will be prohibited to input the password or there will be no response when a password is input.

An embodiment of the invention further provides a method of setting an initial security key to a SKEY storage unit of a mobile terminal, which includes:
In step 1001, writing equipment generates a temporary security key tmpSKey, and transmits it to the mobile terminal;
In step 1002, after the mobile terminal obtains the tmpSKey, it transmits the tmpSKey to a security module;
In step 1003, the security module determines whether the value of its SKey is null:

If the value is null, then in step 1004, the security module saves the tmpSKey to the SKey and returns a message "The tmpSKey Has Been Written Successfully" to the mobile terminal, and in step 1005, the mobile terminal obtains its IMEI and returns the IMEI to the writing equipment, and in step 1006, the writing equipment saves the correlation between the returned IMEI of the mobile terminal and the tmpSKey;

If the value is not null, then in step 1007, the security module returns a message "Failed To Write The tmpSKey" to the mobile terminal, and in step 1008, the mobile terminal returns a message "Failed To Write the tmpSKey" to the writing equipment.

Here, when the value of the SKey is null, it means that the value of the SKey is 0 or a certain value, such as a 128-bit binary number with all the bits "1".

In step 1008, when the mobile terminal has failed to write the tmpSKey in the security module, it may also obtain the IMEI of the mobile terminal and return the IMEI to the writing equipment. In step 1005 and step 1008, the mobile terminal may distinguish whether the tmpSKey has been written successfully by carrying a success or failure flag in a command returned to the writing equipment.

By means of the above method of setting a security key to a SKey storage unit in a mobile terminal, when a mobile terminal is produced by a mobile terminal manufacturer, a SKey storage unit in a security module may be preset to null and then be packaged. After the storage unit is packaged, it can only be accessed via an access interface of the security module. According to the above method, after the storage unit is packaged, a tmpSKey may be written to the security module of the mobile terminal via a serial port of the mobile terminal through the writing equipment.

Of course, an initial flag iFlag may also be set in the security module, and in step 1003, it is not determined whether the value of the SKey is null, instead, it is determined whether the value of the initial flag iFlag is 1. If the value of the iFlag is 1, then in step 1004, the tmpSKey is saved to the SKey and a message "The tmpSKey Has been Written Successfully" is returned to the mobile terminal. In step 1005, the mobile terminal obtains its IMEI and returns the IMEI to the writing equipment. In step 1006, the writing equipment saves the correlation between the returned IMEI of the mobile terminal and the tmpSKey;

If the value of the iFlag is 0, then return a message "Failed To Write the tmpSKey" to the mobile terminal in step 1007, and in step 1008, the mobile terminal returns a message "Failed To Write the tmpSKey" to the writing equipment.

The method of setting an operation and maintenance password Pswd to a mobile terminal and the method of setting a super-password SPswd to a mobile terminal, or the prompt words are similar to those in the above method of setting the value of a SKey, and thus they will not be described again here.

It should be understood that the above description is only preferred embodiments of the invention, and should not be construed as limiting the invention. Various modifications, substitution and improvements etc. made without departing from the principle of the invention are intended to be encompassed in the scope of the invention.

## Claims

1. A method for setting a key, comprising:
setting (201) a first security key in a mobile terminal;
providing (202) a corresponding relation between the first security key and an identity of the mobile terminal, the corresponding relation being saved on a network side;
obtaining (203) the saved corresponding first security key according to the identity of the mobile terminal, and generating (204) a second security key of the network side according to the first security key and saving the second security key of the network side in the subscription data of the subscriber of the mobile terminal;
generating (204), at the network side, an electronic key according to the first security key, and returning the electronic key to the mobile terminal; and
determining (206), in the mobile terminal, the validity of the electronic key after obtaining the electronic key, and generating and saving a second security key of the mobile terminal after it is determined that the electronic key is valid, wherein
the second security key of the network side is generated according to a random number, an authentication key in the subscription data and the saved corresponding first security key; and
a second security key of the mobile terminal is generated according the random number, an authentication key in a subscriber card and the saved first security key.

2. The method according to claim 1, wherein the step of obtaining the saved corresponding first security key according to the identity of the mobile terminal further comprising:
obtaining the identity of the mobile terminal, and getting the saved corresponding first security key according to the identity.

3. The method according to claim 2, wherein the step of obtaining the identity of the mobile terminal further comprising one of the followings:
obtaining the identity of the mobile terminal from subscription data of a subscriber of the mobile terminal according to an identity of the subscriber, the identity of the mobile terminal being set in the subscription data of the subscriber; and, receiving the identity of the mobile terminal sent by the mobile terminal.

4. The method according to claim 1, wherein the step of generating an electronic key according to the first security key further comprising one of the followings:
receiving a request for obtaining an electronic key from the mobile terminal and a random number carried in the request, and obtaining a result according to the random number and the first security key, and taking the result as the electronic key to be returned to the mobile terminal;
generating a controllable random number, obtaining a result according to the controllable random number and the first security key, and taking the result and the controllable random number together as the electronic key to be returned to the mobile terminal; and
generating a random number, obtaining a result according to a pre-saved serial number, the random number and the first security key, and taking the serial number, the random number and the result together as the electronic key to be returned to the mobile terminal.

5. The method according to any one of claims 1 to 4, further comprising: arranging a mobile terminal equipment information module for saving the correlation between the identity of the mobile terminal and the first security key on the network side.

6. The method according to claim 5, wherein the network side requests the first security key corresponding to the mobile terminal from the mobile terminal equipment information module according to the identity of the mobile terminal.

7. The method according to claim 6, further comprising:
saving a corresponding zone information according to the identity of the mobile terminal; and
determining whether the corresponding first security key has been obtained successfully according to the consistency between the identity of the subscriber card of the mobile terminal or the directory number of the mobile subscriber and
the zone information corresponding to the identity of the mobile terminal.

8. The method according to claim 6, further comprising:
saving the corresponding identity information of the subscriber card or the directory number of the mobile subscriber according to the identity of the mobile terminal; and
determining whether the corresponding first security key has been obtained successfully according to the consistency between the identity of the subscriber card of the mobile terminal or the directory number of the mobile subscriber and the identity of the subscriber card of the mobile terminal or the directory number information of the mobile subscriber corresponding to the identity of the mobile terminal.

9. The method according to claim 1, wherein the identity of the mobile terminal is the identity of the subscriber card of the mobile terminal.

10. A communication system, comprising:
a network side being adapted for providing a wireless communication service;
a mobile terminal bein adapted for communicating with the network side and for setting a first security key,
the network side being adapted to save a corresponding relation between the first security key and an identity of the mobile terminal or an identity of a subscriber card of the mobile terminal, to obtain the saved corresponding first security key according to the identity, and to generate a second security key of the network side according to the first security key and to save the second security key of the network side in the subscription data of the subscriber of the mobile terminal
the network side is further adapted to generate an electronic key according to the first security key, and return the electronic key to the mobile terminal; and
the mobile terminal is further adapted to determine the validity of the electronic key after obtaining the electronic key, and generate and save a second security key of the mobile terminal after it is determined that the electronic key is valid,
wherein the second security key of the network side is generated according to a random number, an authentication key in the subscription data and the saved corresponding first security key; and
a second security key of the mobile terminal is generated according the random number, an authentication key in a subscriber card and the saved first security key.

11. The communication system according to claim 10, wherein the mobile terminal further comprises a security module adapted to save the first security key or the second security key of the mobile terminal.

12. The communication system according to claim 10, wherein the network side further comprises a mobile terminal equipment information module adapted to save the correlation between the identity of the mobile terminal or the subscriber card of the mobile terminal and the first security key.

## Patentansprüche

1. Verfahren zum Setzen eines Schlüssels, umfassend:
Setzen (201) eines ersten Sicherheitsschlüssels in einem mobilen Endgerät;
Bereitstellen (202) einer entsprechenden Beziehung zwischen dem ersten Sicherheitsschlüssel und einer Identität des mobilen Endgeräts, wobei die entsprechende Beziehung auf einer Netzwerkseite gespeichert wird;
Erhalten (203) des gespeicherten entsprechenden ersten Sicherheitsschlüssels gemäß der Identität des mobilen Endgeräts und Generieren (204) eines zweiten Sicherheitsschlüssels der Netzwerkseite gemäß dem ersten Sicherheitsschlüssel und Speichern des zweiten Sicherheitsschlüssels der Netzwerkseite in den Subskriptionsdaten des Teilnehmers des mobilen Endgeräts;
Generieren (204) - auf der Netzwerkseite - eines elektronischen Schlüssels gemäß dem ersten Sicherheitsschlüssel und Rückgeben des elektronischen Schlüssels an das mobile Endgerät; und
Bestimmen (206) - im mobilen Endgerät - der Gültigkeit des elektronischen Schlüssels nach Erhalt des elektronischen Schlüssels und Generieren und Speichern eines zweiten Sicherheitsschlüssels des mobilen Endgeräts, nachdem festgestellt ist, dass der elektronische Schlüssel gültig ist, wobei
der zweite Sicherheitsschlüssel der Netzwerkseite gemäß einer Zufallszahl, einem Authentifizierungsschlüssel in den Subskriptionsdaten und dem gespeicherten entsprechenden ersten Sicherheitsschlüssel generiert wird; und ein zweiter Sicherheitsschlüssel des mobilen Endgeräts gemäß der Zufallszahl, einem Authentifizierungsschlüssel in einer Teilnehmerkarte und dem gespeicherten ersten Sicherheitsschlüssel generiert wird.

2. Verfahren gemäß Anspruch 1, wobei der Schritt des Erhaltens des gespeicherten entsprechenden ersten Sicherheitsschlüssels gemäß der Identität des mobilen Endgeräts weiter umfasst:
Erhalten der Identität des mobilen Endgeräts und Erlangen des gespeicherten entsprechenden ersten Sicherheitsschlüssels gemäß der Identität.

3. Verfahren gemäß Anspruch 2, wobei der Schritt des Erhaltens der Identität des mobilen Endgeräts weiter eins der Folgenden umfasst:
Erhalten der Identität des mobilen Endgeräts aus Subskriptionsdaten eines Teilnehmers des mobilen Endgeräts gemäß einer Identität des Teilnehmers, wobei die Identität des mobilen Endgeräts in den Subskriptionsdaten des Teilnehmers eingestellt ist; und Empfangen der durch das mobile Endgerät gesendeten Identität des mobilen Endgeräts.

4. Verfahren gemäß Anspruch 1, wobei der Schritt des Generierens eines elektronischen Schlüssels gemäß dem ersten Sicherheitsschlüssel weiter eins der Folgenden umfasst:
Empfangen einer Anfrage zum Erhalten eines elektronischen Schlüssels vom mobilen Endgerät und einer in der Anfrage übertragenen Zufallszahl und Erhalten eines Ergebnisses gemäß der Zufallszahl und dem ersten Sicherheitsschlüssel und Nehmen des Ergebnisses als an das mobile Endgerät zurückzugebenden elektronischen Schlüssel;
Generieren einer kontrollierbaren Zufallszahl, Erhalten eines Ergebnisses gemäß der kontrollierbaren Zufallszahl und dem ersten Sicherheitsschlüssel und Nehmen des Ergebnisses und der kontrollierbaren Zufallszahl zusammen als an das mobile Endgerät zurückzugebenden elektronischen Schlüssel; und
Generieren einer Zufallszahl, Erhalten eines Ergebnisses gemäß einer zuvor gespeicherten Seriennummer, der Zufallszahl und dem ersten Sicherheitsschlüssel und Nehmen der Seriennummer, der Zufallszahl und des Ergebnisses zusammen als an das mobile Endgerät zurückzugebenden elektronischen Schlüssel.

5. Verfahren gemäß einem beliebigen der Ansprüche 1 bis 4, weiter umfassend: Einrichten eines Informationsmoduls für mobile Endgeräteeinrichtungen zum Speichern der Korrelation zwischen der Identität des mobilen Endgeräts und dem ersten Sicherheitsschlüssel auf der Netzwerkseite.

6. Verfahren gemäß Anspruch 5, wobei die Netzwerkseite den dem mobilen Endgerät entsprechenden ersten Sicherheitsschlüssel vom Informationsmodul für mobile Endgeräteeinrichtungen gemäß der Identität des mobilen Endgeräts abfragt.

7. Verfahren gemäß Anspruch 6, weiter umfassend:
Speichern einer entsprechenden Zoneninformation gemäß der Identität des mobilen Endgeräts; und
Bestimmen, ob der entsprechende erste Sicherheitsschlüssel erfolgreich gemäß der Übereinstimmung zwischen der Identität der Teilnehmerkarte des mobilen Endgeräts oder der Verzeichnisnummer des mobilen Teilnehmers und der Zoneninformation, die der Identität des mobilen Endgeräts entspricht, erhalten wurde.

8. Verfahren gemäß Anspruch 6, weiter umfassend:
Speichern der entsprechenden Identitätsinformation der Teilnehmerkarte oder der Verzeichnisnummer des mobilen Teilnehmers gemäß der Identität des mobilen Endgeräts; und
Bestimmen, ob der entsprechende erste Sicherheitsschlüssel erfolgreich gemäß der Übereinstimmung zwischen der Identität der Teilnehmerkarte des mobilen Endgeräts oder der Verzeichnisnummer des mobilen Teilnehmers und der Identität der Teilnehmerkarte des mobilen Endgeräts oder der Verzeichnisnummerninformation des mobilen Teilnehmers, die der Identität des mobilen Endgeräts entspricht, erhalten wurde.

9. Verfahren gemäß Anspruch 1, wobei die Identität des mobilen Endgeräts die Identität der Teilnehmerkarte des mobilen Endgeräts ist.

10. Kommunikationssystem, umfassend:
eine Netzwerkseite, die zum Bereitstellen eines drahtlosen Kommunikationsdienstes angepasst ist;
ein mobiles Endgerät, das zum Kommunizieren mit der Netzwerkseite und zum Setzen eines ersten Sicherheitsschlüssels angepasst ist,
wobei die Netzwerkseite angepasst ist, eine entsprechende Beziehung zwischen dem ersten Sicherheitsschlüssel und einer Identität des mobilen Endgeräts oder einer Identität einer Teilnehmerkarte des mobilen Endgeräts zu speichern, den gespeicherten entsprechenden ersten Sicherheitsschlüssel gemäß der Identität zu erhalten, und einen zweiten Sicherheitsschlüssel der Netzwerkseite gemäß dem ersten Sicherheitsschlüssel zu generieren und den zweiten Sicherheitsschlüssel der Netzwerkseite in den Subskriptionsdaten des Teilnehmers des mobilen Endgeräts zu speichern,
die Netzwerkseite weiter angepasst ist, einen elektronischen Schlüssel gemäß dem ersten Sicherheitsschlüssel zu generieren und den elektronischen Schlüssel an das mobile Endgerät zurückzugeben; und
das mobile Endgerät weiter angepasst ist, die Gültigkeit des elektronischen Schlüssels nach Erhalt des elektronischen Schlüssels zu bestimmen und einen zweiten Sicherheitsschlüssel des mobilen Endgeräts zu generieren und zu speichern, nachdem festgestellt ist, dass der elektronische Schlüssel gültig ist,
wobei der zweite Sicherheitsschlüssel der Netzwerkseite gemäß einer Zufallszahl, einem Authentifizierungsschlüssel in den Subskriptionsdaten und dem gespeicherten entsprechenden ersten Sicherheitsschlüssel generiert wird; und
ein zweiter Sicherheitsschlüssel des mobilen Endgeräts gemäß der Zufallszahl, einem Authentifizierungsschlüssel in einer Teilnehmerkarte und dem gespeicherten ersten Sicherheitsschlüssel generiert wird.

11. Kommunikationssystem gemäß Anspruch 10, wobei das mobile Endgerät weiter ein Sicherheitsmodul enthält, das angepasst ist, den ersten Sicherheitsschlüssel oder den zweiten Sicherheitsschlüssel des mobilen Endgeräts zu speichern.

12. Kommunikationssystem gemäß Anspruch 10, wobei die Netzwerkseite weiter ein Informationsmodul für mobile Endgeräteeinrichtungen enthält, das angepasst ist, die Korrelation zwischen der Identität des mobilen Endgeräts oder der Teilnehmerkarte des mobilen Endgeräts und dem ersten Sicherheitsschlüssel zu speichern.

## Revendications

1. Méthode pour définir une clé, comprenant :
la définition (201) d'une première clé de sécurité dans un terminal mobile ;
la fourniture (202) d'une relation correspondante entre la première clé de sécurité et une identité du terminal mobile, ladite relation correspondante étant mémorisé sur un côté réseau ;
l'obtention (203) de ladite première clé de sécurité correspondante mémorisée selon l'identité du terminal mobile et la génération (204) d'une seconde clé de sécurité du côté réseau selon ladite première clé de sécurité et la mémorisation de ladite seconde clé de sécurité du côté réseau dans les données d'abonnement de l'abonné du terminal mobile ;
la génération (204), sur le côté réseau, d'une clé électronique selon ladite première clé de sécurité et la transmission de ladite clé électronique au terminal mobile; et
la détermination (206), dans le terminal mobile, de la validité de la clé électronique après l'obtention de ladite clé électronique et la génération et la mémorisation d'une seconde clé de sécurité du terminal mobile après qu'il ait été déterminé que la clé électronique est valable, sachant que
la seconde clé de sécurité du côté réseau est générée selon un numéro aléatoire, une clé d'authentification dans les données d'abonnement et la première clé de sécurité mémorisée correspondante, et
qu'une seconde clé de sécurité du terminal mobile est générée selon un numéro aléatoire, une clé d'authentification dans une carte d'abonné et la première clé de sécurité mémorisée.

2. Méthode selon la revendication 1, dans laquelle l'étape d'obtention de la première clé de sécurité mémorisée correspondante selon l'identité du terminal mobile comprend en outre :
l'obtention de l'identité du terminal mobile et l'acquisition de la première clé de sécurité mémorisée correspondante selon l'identité.

3. Méthode selon la revendication 2, dans laquelle l'étape d'obtention de l'identité du terminal mobile comprend en outre l'une quelconque des étapes suivantes :
L'obtention de l'identité du terminal mobile à partir des données d'abonnement d'un abonné du terminal mobile selon une identité de l'abonné, l'identité du terminal mobile étant définie dans les données d'abonnement de l'abonnement et la réception de l'identité du terminal mobile envoyée par le terminal mobile.

4. Méthode selon la revendication 1, dans laquelle l'étape de génération d'une clé électronique selon la première clé se sécurité comprend en outre l'une des étapes suivantes :
la réception d'une requête pour obtenir une clé électronique à partir du terminal mobile et un numéro aléatoire transporté dans la requête, l'obtention d'un résultat selon le numéro aléatoire et la première clé de sécurité et la prise en charge dudit résultat comme la clé électronique devant être retournée au terminal mobile ;
la génération d'un numéro aléatoire contrôlable, l'obtention d'un résultat selon ledit numéro aléatoire contrôlable et la première clé de sécurité et la prise en charge commune dudit résultat et du numéro aléatoire contrôlable comme la clé électronique devant être retournée au terminal mobile ; et
la génération d'un numéro aléatoire, l'obtention d'un résultat selon le numéro de série pré-mémorisé, le numéro aléatoire et la première clé de sécurité et la prise en charge commune dudit numéro de série, dudit numéro aléatoire et résultat comme la clé électronique devant être retournée au terminal mobile.

5. Méthode selon l'une quelconque des revendications 1 à 4, comprenant en outre : l'arrangement d'un module d'information pour l'équipement du terminal mobile pour mémoriser la corrélation entre l'identité du terminal mobile et la première clé de sécurité sur le côté réseau.

6. Méthode selon la revendication 5, dans laquelle le côté réseau, selon l'identité du terminal mobile, demande au module d'information pour l'équipement du terminal mobile la première clé de sécurité correspondant au terminal mobile.

7. Méthode selon la revendication 6, comprenant en outre :
la mémorisation d'informations de zone correspondante selon l'identité du terminal mobile, et
déterminer si la première clé de sécurité correspondante a été obtenue avec succès selon la cohérence entre l'identité de la carte d'abonné du terminal mobile ou le numéro d'appel de l'abonné mobile et les informations de zone correspondant à l'identité du terminal mobile.

8. Méthode selon la revendication 6, comprenant en outre :
la mémorisation des informations d'identité correspondantes de la carte d'abonné ou le numéro d'appel de l'abonné mobile selon l'identité du terminal mobile, et
déterminer si la première clé de sécurité correspondante a été obtenue avec succès selon la cohérence entre l'identité de la carte d'abonné du terminal mobile ou le numéro d'appel de l'abonné mobile et l'identité de la carte d'abonné du terminal mobile ou les informations de numéro d'appel de l'abonné mobile correspondant à l'identité du terminal mobile.

9. Méthode selon la revendication 1, dans laquelle l'identité du terminal mobile est l'identité de la carte d'abonné du terminal mobile.

10. Système de communication, comportant :
un côté réseau étant adapté pour fournir un service de communication sans fil ;
un terminal mobile étant adapté pour communiquer avec ledit côté réseau et définir une première clé de sécurité,
le côté réseau étant adapté pour mémoriser une relation correspondante entre la première clé de sécurité et une identité du terminal mobile ou une identité d'une carte d'abonné du terminal mobile pour obtenir ladite première clé de sécurité mémorisée selon l'identité, générer une seconde clé de sécurité du côté réseau selon ladite première clé de sécurité et mémoriser ladite seconde clé de sécurité du côté réseau dans les données d'abonnement de l'abonnée au terminal mobile ; le côté réseau est en outre adapté pour générer une clé électronique selon ladite première clé de sécurité et transmettre ladite clé électronique au terminal mobile ; et
le terminal mobile est en outre adapté pour déterminer la validité de la clé électronique après l'obtention de ladite clé électronique et générer et mémoriser une seconde clé de sécurité du terminal mobile après qu'il ait été déterminé que la clé électronique est valable,
sachant que la seconde clé de sécurité du côté réseau est générée selon un numéro aléatoire, une clé d'authentification dans les données d'abonnement et la première clé de sécurité mémorisée correspondante, et
qu'une seconde clé de sécurité du terminal mobile est générée selon un numéro aléatoire, une clé d'authentification dans une carte d'abonné et la première clé de sécurité mémorisée.

11. Système de communication selon la revendication 10, dans lequel le terminal mobile comprend en outre un module de sécurité adapté pour mémoriser la première clé de sécurité ou la seconde clé de sécurité du terminal mobile.

12. Système de communication selon la revendication 10, dans lequel le côté réseau comprend en outre un module d'information pour l'équipement du terminal mobile, lequel est adapté pour mémoriser la corrélation entre l'identité du terminal mobile ou la carte d'abonné du terminal mobile et la première clé de sécurité.
